# FASCICULE DE BREVET EUROPEEN

(11) **EP 3 900 228 B1**
(45) Date de publication et mention de la délivrance du brevet: **13.12.2023**
(21) Numéro de dépôt: 19848885.0
(22) Date de dépôt: 19.12.2019
(51) Int. Cl.: H04B 13/00

(54) **PROCÉDÉ ET DISPOSITIF DE RECONNAISSANCE D'UN UTILISATEUR**
VERFAHREN UND VORRICHTUNG ZUR ERKENNUNG EINES BENUTZERS
METHOD AND DEVICE FOR RECOGNISING A USER

(30) Priorité: 21.12.2018 FR 1873759
(43) Date de publication de la demande: 27.10.2021
(73) Titulaire: Orange, 92130 Issy-les-Moulineaux (FR)
(72) Inventeur: DE LA FOREST DIVONNE, Aymeric, 92326 CHÂTILLON CEDEX (FR); LEVIONNAIS, Philippe, 92326 CHÂTILLON CEDEX (FR)
(86) Numéro de dépôt international: PCT/FR2019/053194
(87) Numéro de publication internationale: WO 2020/128356

(56) Documents cités:
- EP-B1- 1 259 930
- XUEFENG YIN ET AL: "Personal authentication using the fingerprints of intra-body radio propagation channels", MEDICAL INFORMATION AND COMMUNICATION TECHNOLOGY (ISMICT), 2013 7TH INTERNATIONAL SYMPOSIUM ON, IEEE, 6 mars 2013 (2013-03-06), pages 159-163, XP032415573, DOI: 10.1109/ISMICT.2013.6521721 ISBN: 978-1-4673-5770-8
- NAKANISHI ISAO ET AL: "New dedicated measuring devices for intra-palm propagation signals", 2014 INTERNATIONAL SYMPOSIUM ON BIOMETRICS AND SECURITY TECHNOLOGIES (ISBAST), IEEE, 26 août 2014 (2014-08-26), pages 35-38, XP032722687, DOI: 10.1109/ISBAST.2014.7013090
- ISAO NAKANISHI ET AL: "Biometric Identity Verification Using Intra-Body Propagation Signal", BIOMETRICS SYMPOSIUM, 2007, IEEE, PI, 1 septembre 2007 (2007-09-01), pages 1-6, XP031202446, ISBN: 978-1-4244-1548-9

## Description

### 1. Domaine de l'invention

L'invention concerne la reconnaissance d'un utilisateur humain ou animal porteur d'un dispositif permettant la communication en champ proche. Plus précisément, elle concerne l'authentification ou identification d'un utilisateur porteur d'un terminal mobile.

### 2. Art Antérieur

Pour authentifier ou identifier un utilisateur porteur d'un terminal mobile, comme par exemple un smartphone, de nombreuses solutions sont connues : saisie d'un code confidentiel, reconnaissance faciale, empreinte digitale, authentification par l'iris etc. Elles permettent notamment de déverrouiller un terminal connecté et alimenté, comme par exemple un smartphone, et éventuellement d'effectuer des transactions sécurisées réservées au seul utilisateur authentifié ou identifié.

Cependant ces méthodes supposent une action particulière de l'utilisateur : approcher le visage de l'écran, poser un doigt sur le lecteur d'empreinte digitale, etc. De surcroît l'utilisateur peut être réticent à fournir une information qu'il juge sensible, comme par exemple son empreinte, qui peut être réutilisée à des fins malhonnêtes.

Le document "Personal Authentication using the Fingerprints of Intra-body Radio Propagation Channels (Xuefeng Yin et al., 2013) divulgue un procédé et dispositif de reconnaissance d'un utilisateur utilisant la propagation d'un signal radio connu dans le corps de l'utilisateur.

### 3. Exposé de l'invention

L'invention vient améliorer l'état de la technique. Elle propose à cet effet un procédé de reconnaissance d'un utilisateur selon la revendication 1.

Selon l'invention, un procédé de reconnaissance d'un utilisateur est proposé. Avantageusement, un tel dispositif permet de reconnaître un utilisateur, et donc de l'authentifier ou identifier dans le but de valider une transaction de manière très simple, puisque l'utilisateur n'effectue aucune action particulière pour être reconnu. Le signal réémis et reçu par le dispositif est une fonction de l'utilisateur, et sa connaissance permet de le reconnaître. La forme du signal généré et transmis via le corps de l'utilisateur dépend en effet d'un certain nombre de caractéristiques propres au porteur (corpulence, âge, sexe, humidité des tissus, etc.). L'analyse d'un tel signal (forme, puissance, etc.) permet d'en dégager des caractéristiques qui lui sont propres, donc de le reconnaître par comparaison avec un signal de référence similaire connu (une signature). Si un autre utilisateur s'approprie le terminal, comme il ne dispose pas des mêmes caractéristiques biométriques, il ne pourra pas être reconnu.

Par « reconnaissance », on entend ici la reconnaissance de la signature de l'utilisateur au sens large. Il peut s'agir d'une authentification, c'est-à-dire une vérification de la légitimité de l'utilisateur du terminal (ou reconnaissance du fait que l'utilisateur est bien le propriétaire du téléphone), ou d'une identification de l'utilisateur, c'est à dire l'établissement de l'identité de l'utilisateur (il s'agit de Jacques et non de Paul) ; l'identification peut naturellement être suivie d'une authentification (Jacques est légitime pour utiliser le terminal) et vice-versa.

Par « dispositif d'émission-réception », on entend tout dispositif apte à émettre un signal impulsionnel sous forme d'une onde électromagnétique, par exemple de type NFC. Un tel dispositif peut être un terminal quelconque associé à l'utilisateur.

Grâce à l'invention, la reconnaissance est automatique et sécurisée. En effet, selon l'art antérieur, l'utilisateur qui souhaite être reconnu doit pour cela effectuer une action spécifique comme par exemple rentrer un code, ou présenter son empreinte digitale, etc.

Par «signal de référence » on entend soit le signal lui-même soit un ensemble de données permettant de le représenter.

Par «proximité», on entend une distance suffisamment petite pour que la communication soit établie sur le canal humain (par exemple inférieure à quelques cm). On notera que la peau de l'utilisateur n'a pas besoin d'être en contact avec le terminal pour que la communication s'établisse ; la main de l'utilisateur n'est pas non plus nécessairement en contact physique avec l'antenne du dispositif.

Selon un mode particulier de réalisation de l'invention, l'étape de reconnaissance du procédé est suivie d'une étape de mise à jour du signal de référence de l'utilisateur par la prise en compte du signal réémis.

Avantageusement selon ce mode, le signal utilisé pour la reconnaissance est utilisé pour mettre à jour la signature de l'utilisateur. En effet, l'empreinte corporelle de l'utilisateur lui est intrinsèque et peut évoluer avec le temps (en fonction de son âge, etc.). Cette signature peut donc être régulièrement mise à jour, assurant de ce fait une sécurité plus élevé qu'un paramètre biologique statique (empreinte digitale, iris, etc.) qui n'évolue pas avec le temps et sui peut de surcroît être dérobée.

Selon un mode particulier de réalisation de l'invention, l'étape de reconnaissance du procédé est suivie d'une étape de déverrouillage du dispositif d'émission-réception.

Avantageusement selon ce mode, le dispositif peut être déverrouillé automatiquement dès que l'utilisateur le saisit (ou s'en approche) et réémet automatiquement via son corps l'onde électromagnétique qui a été émise par le dispositif.

Selon un autre mode particulier de réalisation de l'invention, l'étape de reconnaissance du procédé est suivie d'une étape d'autorisation d'une transaction. Avantageusement selon ce mode, une transaction nécessitant une authentification de l'utilisateur, comme par exemple une transaction bancaire, peut être effectuée automatiquement, dès que l'utilisateur s'approche du dispositif, et sans mise en oeuvre d'une procédure complexe d'authentification comme proposé dans l'art antérieur.

Selon un autre mode particulier de réalisation de l'invention, ledit au moins un signal de référence est associé à un identifiant d'un utilisateur et l'étape de reconnaissance est suivie d'une étape de sélection de l'utilisateur reconnu par son identifiant.

Avantageusement selon ce mode, l'utilisateur est identifié (en plus d'être éventuellement authentifié), c'est-à-dire qu'il est reconnu parmi plusieurs utilisateurs. Ceci peut permettre de mettre en oeuvre des transactions personnalisées : sélection d'un profil de l'utilisateur, affichage d'informations personnalisées, personnalisation du dispositif ou d'un autre dispositif auquel il est relié, etc.

Selon un autre mode particulier de réalisation de l'invention, l'étape de comparaison du signal réémis avec au moins un signal de référence de l'utilisateur comporte les sous-étapes suivantes :
- numérisation du signal reçu ;
- normalisation du signal numérisé ;
- mesure d'une distance entre les deux signaux.

Ce mode de réalisation de l'invention permet une mise en oeuvre simple d'une étape de comparaison entre le signal obtenu en retour et la signature de référence. Tout type de calcul de distance à la portée de l'homme du métier pourra être utilisé. Cette distance peut être classiquement comparée à un seuil prédéterminé, ou distance maximale acceptable entre les deux signaux. Comme les deux signaux ne sont pas forcément alignés, par exemple parce que l'utilisateur porte des vêtements différents, ou parce que le terminal est plus ou moins éloigné du corps, il est souhaitable d'utiliser au préalable un algorithme de traitement capable de normaliser le second signal afin de prendre en compte un éventuel décalage d'amplitude entre les signaux.

L'invention concerne également un procédé d'apprentissage d'une signature d'un utilisateur selon la revendication 7.

Selon l'invention, un procédé d'apprentissage de la signature d'un utilisateur, en vue de sa reconnaissance, est proposé. Ce procédé permet d'enregistrer une signature de l'utilisateur, en vue de sa comparaison ultérieure avec la réponse du corps de l'utilisateur à un signal impulsionnel émis par le dispositif.

Selon un autre mode particulier de réalisation de l'invention, le procédé d'apprentissage est en outre caractérisé en ce que le signal de référence est enregistré en association avec un identifiant de l'utilisateur.

Selon un autre mode particulier de réalisation de l'invention, le procédé d'apprentissage est en outre caractérisé en ce que le signal de référence dépend d'un mouvement de validation exécuté par l'utilisateur lorsqu'il s'approche du dispositif. Avantageusement selon ce mode, il est possible de combiner la signature biométrique de l'utilisateur à une signature relative à un mouvement particulier de l'utilisateur lorsqu'il s'approche du terminal. Une telle approche volontaire d'un terminal IBC a notamment été décrite dans la demande publiée sous le numéro WO 2016/001506 A1. Le mouvement de l'utilisateur modifie en effet la nature de l'onde reçue et/ou réémise, de telle manière que la signature porte la marque du mouvement : le signal n'est pas réémis de la même manière selon que l'utilisateur s'approche vite ou lentement, en accélérant ou décélérant, etc.

Selon un aspect matériel, l'invention concerne également un dispositif de reconnaissance d'un utilisateur selon la revendication 9.

Selon un autre aspect matériel, l'invention concerne également un terminal mobile comprenant un tel dispositif de reconnaissance.

Selon un autre aspect matériel, l'invention concerne également un dispositif de contrôle d'accès comprenant un tel dispositif de reconnaissance.

Selon un aspect matériel, l'invention concerne également un dispositif d'apprentissage d'une signature d'un utilisateur selon la revendication 11.

Selon un autre aspect matériel, l'invention concerne également un terminal mobile comprenant un tel dispositif d'apprentissage.

Selon un autre aspect matériel, l'invention concerne également un dispositif de contrôle d'accès comprenant un tel dispositif d'apprentissage.

L'invention concerne également un programme d'ordinateur comportant des instructions pour la mise en oeuvre de l'un des procédés ci-dessus selon l'un quelconque des modes particuliers de réalisation décrits précédemment.

Le procédé peut être mis en oeuvre de diverses manières, notamment sous forme câblée ou sous forme logicielle. Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement ou support d'informations lisible par un ordinateur, et comportant des instructions d'un programme d'ordinateur tel que mentionné ci-dessus. Les supports d'enregistrement mentionnés ci-avant peuvent être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple un disque dur. D'autre part, les supports d'enregistrement peuvent correspondre à un support transmissible tel qu'un signal électrique ou optique, qui peut être acheminé via un câble électrique ou optique, par radio ou par d'autres moyens. Les programmes selon l'invention peuvent être en particulier téléchargés sur un réseau de type Internet.

Alternativement, les supports d'enregistrement peuvent correspondre à un circuit intégré dans lequel le programme est incorporé, le circuit étant adapté pour exécuter ou pour être utilisé dans l'exécution du procédé en question.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
[Fig 1] La figure 1 illustre un exemple d'environnement de mise en oeuvre de l'invention selon un mode particulier de réalisation,
[Fig 2] La figure 2 illustre l'architecture d'un système mettant en oeuvre l'invention selon un mode de réalisation,
[Fig 3] La figure 3 illustre des étapes du procédé d'apprentissage d'une signature selon un mode particulier de réalisation de l'invention,
[Fig 4] La figure 4 illustre des étapes du procédé de reconnaissance selon un mode particulier de réalisation de l'invention,
[Fig 5] La figure 5 montre un exemple de réponse impulsionnelle reçue pour un utilisateur.

### 5. Description d'un mode de réalisation de l'invention

### 5.1 Principe général de l'invention

Le procédé de reconnaissance décrit ici permet à un utilisateur d'être reconnu, c'est à dire authentifié ou identifié, sur un dispositif d'émission-réception, appelé dans la suite terminal. Ce terminal est alimenté et de préférence connecté et mobile, comme par exemple un smartphone, un bracelet connecté, un collier, etc.

Le procédé de reconnaissance permet à l'utilisateur d'être authentifié par le smartphone, pour le déverrouiller et/ou pour utiliser des services à valeur ajoutée tels que des applications de paiement, transport ou autres, nécessitant une authentification forte. Avantageusement, il n'est pas nécessaire à l'utilisateur d'effectuer une action spécifique en vue de la reconnaissance.

L'invention est fondée sur l'utilisation d'une technologie en champ proche, de type NFC. On rappelle que les communications en champ proche, usuellement appelées NFC (*Near Field Communication*), basées principalement sur la norme ISO (International Standard Organisation) 14443, utilisent des technologies sans fil pour permettre un échange d'informations entre deux périphériques éloignés d'une courte distance, typiquement inférieure à quelques centimètres. Les communications de ce type offrent de nombreuses applications, par exemple dans les domaines du paiement et du transport.

Plus récemment sont apparus de nouveaux types de communications sans fil fondées sur les mêmes concepts mais utilisant de surcroît pour canal de communication le corps humain. Dans ces technologies que l'on regroupe sous le terme générique d'IBC (de l'anglais : Intra-Body Communication) ou encore BCC (pour Body Channel Communication), le corps humain agit comme un élément de transmission d'informations d'un point à un autre. Ces méthodes utilisent un couplage électromagnétique entre le système et le corps humain et sont adaptées à une communication de proximité, qui ne nécessite pas forcément de contact physique avec le dispositif.

Lorsque l'utilisateur est à proximité du terminal, un signal impulsionnel émis par le terminal est transmis dans son corps avec une certaine fréquence, correspondant de préférence à celle du NFC. Le corps humain se comporte alors comme une antenne et réémet une onde électromagnétique avec des caractéristique (résistance / capacité / etc...) propre à chaque individu. La réponse à l'impulsion NFC est par conséquent unique et permet d'authentifier l'utilisateur. Il reste possible de coupler cette nouvelle modalité de reconnaissance à d'autres déjà existantes. Il est également possible d'envisager non pas un être humain mais un animal, porteur d'un dispositif NFC (par exemple un chat, le procédé permettant de déverrouiller sa chatière électronique).

### 5.2 Modes particuliers de réalisation de l'invention.

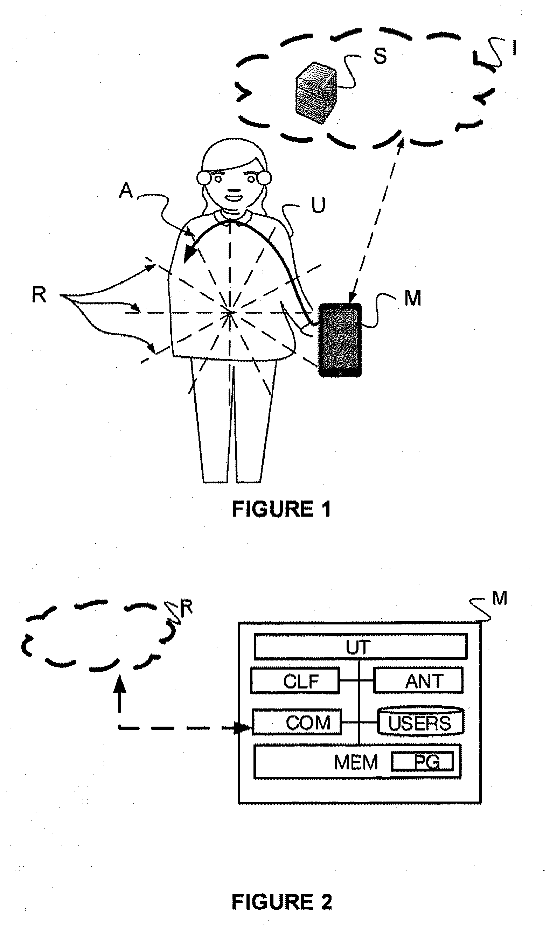

La **figure 1** illustre un exemple d'environnement de mise en oeuvre de l'invention permettant à un utilisateur (U) d'un terminal mobile (M), désigné ici comme le « porteur », d'être authentifié pour réaliser une transaction via son téléphone mobile. L'utilisateur (U) ou porteur du terminal (M) est selon cet exemple un être humain. Le terminal (M) selon l'invention est un dispositif portatif naturellement apte à émettre et recevoir des ondes porteuses radio, via une antenne, à travers le corps de l'utilisateur (U). A cette fin, le terminal (M) est situé à proximité immédiate de l'utilisateur (U), sans nécessairement être en contact direct avec celui-ci. Par exemple, le terminal (M) est placé dans la main de l'utilisateur, ou à quelques centimètres de sa main s'il s'en approche. Dans ces configurations, on estime que l'antenne du terminal (M) n'est pas éloignée de plus de quelques centimètres du corps de l'utilisateur. La distance est par exemple inférieure à 5 cm. Le terminal (M) est équipé d'une batterie ou de piles, pour un fonctionnement autonome. Il s'agit selon cet exemple d'un terminal mobile équipé d'une antenne NFC (non représentée) adaptée en mode IBC pour recevoir les signaux électriques modulés sous forme d'une onde électromagnétique à travers le corps de l'utilisateur. Par adapté, on entend que son antenne peut être amplifiée, ou que l'antenne dispose d'un gain suffisamment élevé. Acquérir une telle antenne ou l'amplifier est à la portée de l'homme du métier.

Par transaction, on entend tout type de transaction, par exemple une transaction monétaire, un achat, une validation de ticket, la personnalisation d'un environnement, un déverrouillage, etc.

On suppose selon un premier exemple que l'utilisateur veut valider un achat via le réseau (I), par exemple un réseau mobile ou Internet. Le terminal est apte à établir avec un serveur (S) du réseau une communication sécurisée dans le but de valider la transaction monétaire ; l'utilisateur doit être authentifié auprès du serveur, c'est-à-dire qu'à l'issue du procédé on est certain qu'il est bien le propriétaire du terminal.

Selon un autre exemple, l'utilisateur (U) souhaite personnaliser un objet via son mobile (un objet connecté, un poste de travail, etc.) pour que l'objet effectue des actions appropriées selon la personne qui le commande via le terminal mobile (verrouillage, affichage personnalisé, etc.) ; l'utilisateur doit dans ce cas être authentifié, et éventuellement identifié, c'est-à-dire qu'à l'issue du procédé on est capable de le discriminer parmi plusieurs personnes.

Selon encore un autre exemple, l'utilisateur souhaite déverrouiller son terminal mobile. Il suffit pour cela qu'il en soit à proximité, par exemple lors d'une prise en main, pour que le processus de reconnaissance soit déclenché et le mobile déverrouillé s'il est authentifié avec succès.

Dans tous les cas, le procédé selon l'invention procède en deux temps, ou phases distinctes :
- Première phase : apprentissage de la signature.

Dans un premier temps, qui correspond à une phase dite d'apprentissage, l'utilisateur effectue plusieurs fois (dans la suite, N fois, où N est un entier naturel) une opération de déclenchement du module d'apprentissage sur son terminal. Le but de cette étape est de récupérer sur le terminal (ou alternativement, sur un autre dispositif avec lequel le terminal est apte à échanger des données) une pluralité (N) de signaux qui correspondent aux signaux générés par la personne (U) en réponse à une impulsion déclenchée par le procédé d'apprentissage du mobile. Ces signaux correspondent aux caractéristiques de l'utilisateur, mais avec de petites variations, car les mêmes paramètres mécaniques/dynamiques et physiologiques de l'utilisateur peuvent varier au cours du temps, entraînant une variation du signal propagé puis réémis par le corps. Néanmoins pour une personne donnée recevant une impulsion d'un terminal donné, tous les signaux sont de forme globale très similaire et représentent une sorte d'empreinte biométrique de l'utilisateur, qu'on appellera par la suite « empreinte caractéristique » ou « signature » de l'utilisateur. L'empreinte caractéristique est donc représentative des caractéristiques intrinsèques du corps de l'utilisateur ; il est en effet bien connu que certains facteurs biologiques, comme par exemple l'âge, l'humidité des tissus du corps etc. de l'utilisateur peuvent influer sur ses caractéristiques de transmission. On pourra par exemple se référer à l'article « Intra-Body Communication Model Based on Variable Biological Parameters » (Khorshid et al., 2015, 49th Asilomar Conférence on Signals, Systems and Computers). De surcroît cette empreinte peut être caractéristique du contrôle moteur de l'utilisateur s'il effectue un geste particulier en direction du mobile lorsqu'il établit la proximité. L'empreinte caractéristique (SIG) peut être obtenue par les N mesures légèrement différentes confiées à un module d'apprentissage chargé de calculer une « valeur moyenne », des différents signaux, ou signal type correspondant à l'empreinte caractéristique. Ce module est par exemple un module d'apprentissage automatique, en anglais « machine learning » (ML). On rappelle que l'apprentissage automatique, ou apprentissage statistique, concerne la conception, l'analyse, le développement et l'implémentation de méthodes permettant à une machine (au sens large) d'évoluer par un processus systématique, et ainsi de remplir des tâches difficiles ou problématiques par des moyens algorithmiques plus classiques. Un exemple possible d'apprentissage automatique est celui de la classification dont le but est d'étiqueter chaque donnée en l'associant à une classe. On peut aussi envisager d'utiliser des réseaux de neurones, des méthodes de décomposition et analyse par ondelettes, etc.

Selon ce mode de réalisation, le module d'apprentissage calcule une empreinte caractéristique à partir des différents signaux renvoyés par un utilisateur (par exemple il réalise une moyenne de tous les essais valables, établit un ensemble de paramètres caractéristiques de l'empreinte, etc.). Puis il enregistre dans une base de données les signaux de référence d'utilisateurs éventuellement repérés par un identifiant. Une fois que l'apprentissage a été effectué, la signature résultante peut avantageusement être enregistrée sur le terminal de l'utilisateur. Si le terminal est utilisé par plusieurs utilisateurs, plusieurs signatures caractéristiques peuvent être enregistrées, par exemple en liaison avec un identifiant de chaque utilisateur s'il est intéressant de les discriminer.
- Seconde phase : exploitation de la signature pour reconnaissance de l'utilisateur

Dans une seconde phase (de mise en oeuvre du service), l'utilisateur du terminal mobile IBC qui souhaite déverrouiller son terminal ou valider une transaction s'en approche et active l'application (de déverrouillage, paiement, de validation, de personnalisation, etc.). Le terminal émet un signal impulsionnel qui se propage dans le corps de l'utilisateur. Un signal de retour est reçu par le terminal. Un module de vérification du terminal ou lié au terminal (par exemple sur un serveur externe) vérifie la signature de l'utilisateur. Il est capable, typiquement, de comparer la courbe de signal type correspondant au signal réémis à une courbe de signal correspondant à la signature de l'utilisateur, qui a été préalablement enregistrée sur le terminal ou dans une base de données accessible du terminal.

Si sa signature est reconnue, l'utilisateur est identifié ou authentifié et la transaction peut être réalisée.

L'invention présente un avantage essentiel d'ergonomie et de sécurité en ce sens qu'elle permet à la personne souhaitant accéder à un service sécurisé d'être identifiée et/ou authentifiée via sa signature sans avoir à réaliser un geste particulier (reconnaissance de visage, d'iris, d'empreinte, saisie de code, etc. )

Cet exemple de réalisation a été donné à titre illustratif et nullement limitatif. De nombreuses variantes pourraient y être apportées. Notamment un autre dispositif, par exemple un serveur externe, peut réaliser l'apprentissage et/ou la reconnaissance sur réception des données en provenance du terminal. Par ailleurs, les phases de reconnaissance et d'apprentissage peuvent être combinées pour réaliser une mise à jour de la signature : après la reconnaissance de l'utilisateur, le signal réémis par le corps de l'utilisateur lors de la phase de reconnaissance peut être utilisé avantageusement pour mettre à jour l'empreinte caractéristique. Ceci permet notamment de faire évoluer au cours du temps la signature de l'utilisateur, pour prendre compte de l'évolution de ses caractéristiques biologiques (due à l'âge par exemple) et mécaniques (due à sa vitesse d'approche du terminal, par exemple).

La **figure 2** illustre un terminal M configuré pour mettre en oeuvre le procédé de reconnaissance d'un utilisateur selon un mode particulier de réalisation de l'invention. Un tel terminal est configuré pour mettre en oeuvre le procédé de reconnaissance selon l'un quelconque des modes particuliers de réalisation de l'invention décrit ci-dessus, ainsi que le procédé d'apprentissage.

Selon un mode particulier de réalisation de l'invention, le dispositif M a l'architecture classique d'un téléphone mobile, de type smartphone, et comprend notamment une mémoire MEM, une unité de traitement UT, équipée par exemple d'un processeur, et pilotée par le programme d'ordinateur PG stocké en mémoire MEM. Le programme d'ordinateur PG comprend des instructions pour mettre en oeuvre les étapes du procédé d'apprentissage ou de reconnaissance tel que décrit précédemment, lorsque le programme est exécuté par le processeur.

A l'initialisation, les instructions de code du programme d'ordinateur PG sont par exemple chargées dans une mémoire avant d'être exécutées par le processeur.

Le dispositif M comprend un module de communication NFC configuré pour établir des communications sans contact, et en particulier pour émettre un signal impulsionnel destiné à être reçu par le corps de l'utilisateur, et pour recevoir en retour un signal électromagnétique qui a transité et a été réémis par le corps de l'utilisateur. Ce module comprend classiquement une antenne NFC (ANT) adaptée pour recevoir des signaux sur la voie radio et via le corps humain, de manière à ce qu'un signal électrique modulé transporté par le corps de l'utilisateur soit apte à être reçu par l'antenne, qui se trouve dans le terminal, en proximité avec le corps humain, ainsi qu'un démodulateur non représenté, destiné à recevoir via l'antenne un signal électrique modulé et à le transformer en un signal numérique destiné à être transmis à l'unité de traitement, un contrôleur (CLF) et des composantes logicielles (firmware, etc.) nécessaires à la mise en oeuvre des communications IBC.

La mémoire MEM est configurée pour mémoriser une liste, ou base (USERS), de signatures. Selon un mode particulier de réalisation de l'invention, une telle base associe un identifiant à une signature pour identifier un utilisateur parmi plusieurs. Selon un mode particulier de réalisation de l'invention, le terminal M comprend un module de communication COM configuré pour établir des communications avec un réseau IP et/ou mobile pour effectuer une transaction.

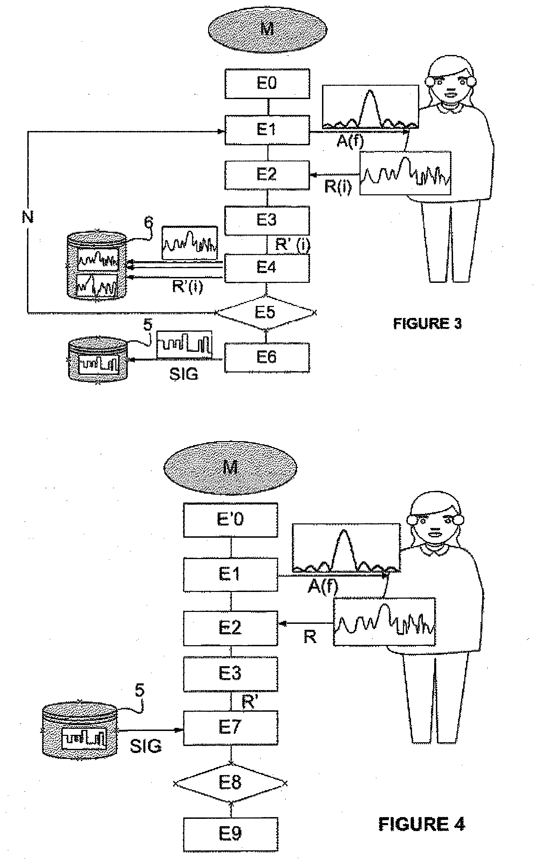

La **figure 3** illustre des étapes du procédé d'apprentissage de la signature selon un mode particulier de réalisation de l'invention.

L'apprentissage est réalisé par répétition de l'émission d'un signal impulsionnel (D) par le terminal et la récupération du signal de réponse qui a transité par le corps de l'utilisateur. L'utilisateur peut se trouver par exemple dans une boutique d'un opérateur de télécommunications et s'apprête à enregistrer son empreinte caractéristique qui sera sa signature de référence, qu'il pourra utiliser par la suite lors de ses services IBC.

On suppose ici que tous les prérequis nécessaires au procédé d'apprentissage ont été effectuées aux cours de l'étape d'initialisation E0, comme par exemple le chargement et le lancement de l'application responsable de la mise en oeuvre du procédé d'apprentissage sur le terminal, et que le terminal est équipé d'une antenne NFC/IBC ayant une amplification appropriée.

Lors d'une étape E1, le terminal émet un signal impulsionnel (A(f)) adapté à une transmission via le corps humain, qui pourra avantageusement être de type NFC (13,56 Mhz) mais encore de toute fréquence appropriée. Par exemple une fréquence autour de 10 Mhz est également adaptée au corps humain. Le corps de l'utilisateur reçoit l'onde et se transforme en antenne, c'est-à-dire qu'il réémet une onde électromagnétique.

Lors d'une étape E2, le terminal reçoit la réponse impulsionnelle R(i) (ou i représente un indice de signal parmi une pluralité de signaux reçus) du corps de l'utilisateur ; à cet effet le mobile est positionné (par exemple par l'application) dans un mode de réception de l'onde électromagnétique. On rappelle que l'antenne doit être apte à recevoir le signal, avec un gain suffisant. Le terminal reçoit et démodule le signal reçu.

Puis lors d'une étape E3, le terminal procède à l'échantillonnage et à la numérisation du signal et à la mise en forme de la réponse impulsionnelle ; à l'issue de ce traitement, un signal R'(i) traité (représenté en temps ou fréquence, ou les deux...) porte les valeurs caractéristiques d'un signal reçu en écho. L'indice i correspond au compteur d'itération, il peut prendre une valeur entre 1 et N et est incrémenté à chaque nouvelle itération de l'algorithme d'apprentissage.

Puis lors d'une étape E4, le terminal mémorise le signal dans une mémoire (représentée ici sous la forme d'une base de données (6) à titre d'exemple). Alternativement il peut aussi transmettre le signal R'(i) à un serveur d'apprentissage externe.

L'étape E5 correspond au test du nombre d'itérations N ; tant que le nombre souhaité d'itérations n'est pas atteint, le mobile réémet une réponse impulsionnelle (étape E1) et reçoit un nouveau signal (étape E2) qu'il traite puis mémorise avec les autres signaux R'(i) (étape E3). Par exemple, le compteur N est fixé à 3 et trois signaux R'(1), R'(2) et R'(3) valides doivent être reçus et enregistrés (du moins temporairement dans une mémoire de travail). Lorsque le nombre d'itérations souhaité est atteint, l'étape E5 sera suivie d'une étape E6 de calcul de la signature (signal de référence). On notera que le nombre N d'itérations peut être prédéfini (par exemple N=3) ou défini par l'algorithme lui-même : par exemple si les signaux R'(i) sont trop différentes les uns des autres, selon un critère statistique (écart type, variance, etc.), le nombre N peut être augmenté ; si les signaux R'(i) sont très proches, il peut être diminué.

Selon un exemple, l'algorithme suivant peut être utilisé :
- acquisition de deux signaux R(1) et R(2) en réponse à une impulsion émise par le mobile, et traitement de ces signaux ;
- calcul d'une distance entre les deux signaux, éventuellement corrigés. Un tel exemple de calcul est classique pour l'homme du métier du traitement de signal : par exemple, une distance euclidienne peut être calculée entre deux premiers signaux. Il est aussi connu, pour comparer deux signaux entre eux, qu'ils soient analogiques ou numériques, de déterminer une fonction de corrélation entre ces deux signaux et de vérifier à partir des valeurs de cette fonction s'il y a identité ou non entre les signaux. On utilise classiquement pour cela des méthodes de calcul numérique de la fonction de corrélation.
- Si la distance est en dessous d'un certain seuil, calcul de la signature, sinon acquisition d'un troisième signal R(3) et calcul d'une distance entre les trois courbes, ou d'une deuxième distance entre le troisième signal et la moyenne des deux premiers, ou d'une distance entre chacune des courbes et une moyenne statistique des trois courbes, etc.
- etc.

Selon un autre exemple, un réseau de neurones peut être utilisé, comme décrit dans l'article « Authentification et Identification de Visages basées sur les Ondelettes et les Réseaux de Neurones. » de M.BELAHCENE-BENATIA Mébarka (Revue science des matériaux, Laboratoire LARHYSS N°02, Septembre 2014 pp.01-08). La méthode décrite, basée sur la transformation d'une image à deux dimensions d'un visage en un vecteur de taille N obtenu en enchaînant les lignes (ou colonnes) de l'image correspondante, suivie de l'établissement d'une matrice de covariance entre les différentes images, peut être facilement adaptée aux échantillons des signaux numériques issus des signaux R(i).

Lors de l'étape E6, le programme d'apprentissage calcule la signature SIG à partir de tous (N) les signaux R(i) reçus. Toute méthode à la portée de l'homme du métier pour obtenir un signal représentatif des N signaux peut être utilisée, par exemple : il effectue une moyenne, ou il utilise un réseau de neurones (convolutionnels) pour apprendre à reconnaître l'utilisateur, ou il utilise un système SVM (Support Vector Machine) pour classer les différents signaux reçus en les mettant dans le sous-ensemble correspondant aux signaux de l'utilisateur, etc.

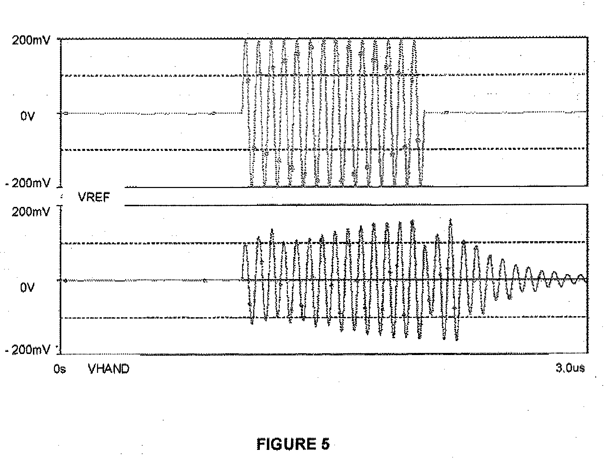

La signature peut prendre typiquement la forme d'un signal analogique ou numérique, c'est-à-dire une fonction représentant les variations du signal correspondant à la réponse moyenne de l'utilisateur sur un intervalle de temps, par exemple quelques secondes. Un tel signal est représenté à titre d'exemple à la figure 5. Alternativement, la signature pourrait prendre la forme de tout ensemble de données caractéristiques du signal généré par le mouvement de l'utilisateur, dépendant à la fois, comme expliqué plus haut, des caractéristiques biologiques de l'utilisateur, et des caractéristiques du terminal : ensemble de données numériques ; index dans un dictionnaire existant de signatures correspondant par exemple à des catégories d'utilisateur du système (selon leur âge, sexe, corpulence, etc.).

La signature ainsi calculée est stockée dans une mémoire, ou base de données (5), soit dans le mobile, soit dans une base de données externe, avec de préférence un identifiant de l'utilisateur (par exemple son nom, sa date de naissance, son numéro de téléphone, l'adresse MAC de son terminal, son numéro de compte bancaire, etc.).

La **figure 4** illustre des étapes du procédé de reconnaissance selon un mode particulier de réalisation de l'invention.

Selon ce mode, l'utilisateur souhaite être authentifié par son terminal mobile, afin par exemple de le déverrouiller ou de réaliser une transaction, par exemple de type monétaire. On suppose ici, sans perte de généralité, que le but est de déverrouiller terminal, ou *smartphone.* L'utilisateur saisit le smartphone, ou tout au moins s'en approche, et un procédé d'authentification automatique s'ensuit, sans nécessité pour lui de saisir son empreinte digitale, ou de rentrer un code PIN, ou de présenter son visage à la caméra du smartphone, etc.

On suppose que la phase d'apprentissage décrite précédemment à l'appui de la figure 3 a été effectuée et que la signature de l'utilisateur se trouve sur le terminal mobile (on rappelle qu'elle pourrait être localisée ailleurs, dans une base de données externe au terminal).

L'étape E'0 est identique à l'étape E0 décrite précédemment pour le procédé d'apprentissage, à l'exception de l'application qui doit être exécutée : il s'agit ici de l'application de reconnaissance. Cette application peut être lancée par l'utilisateur, ou s'exécuter en tâche de fond, ou lorsque la prise en main ou l'approche du mobile a été détectée (par exemple à l'aide d'un gyroscope, d'un accéléromètre, d'un capteur, etc.) ou encore par une action de l'utilisateur (pression sur le bouton de déverrouillage ou sur l'écran) ou de manière cyclique/périodique.

Les étapes E1, E2, E3 sont identiques aux étapes correspondantes décrites précédemment à l'appui de la figure 3.

Lors d'une étape E7, le terminal accède à la mémoire (ou base de données) pour lire la « signature » (réponse impulsionnelle caractéristique) de l'utilisateur. Si la mémoire accédée ne se trouve pas sur le terminal mais par exemple sur un serveur, un canal de communication peut être ouvert avec le réseau pour y accéder.

Lors de l'étape E8 de comparaison, le signal reçu et traité (R/R') est comparé à la signature (SIG) de l'utilisateur. Ceci permet de s'assurer que c'est bien l'utilisateur du terminal qui l'a pris en main, autrement dit cette étape effectue une reconnaissance (authentification ou identification) du porteur. Plusieurs types de comparaison peuvent être effectués, comme par exemple :
- calcul de « distance » entre le signal reçu (R') et la signature stockée dans la base. Si la distance entre les deux signaux est inférieure à un seuil, l'utilisateur est authentifié. On peut faire par exemple une corrélation point à point entre les 2 signaux (le signal candidat reçu et le signal correspondant à la signature) en calculant une différence de chaque valeur des 2 courbes, en déplaçant éventuellement le signal reçu sur le signal de référence. La valeur minimale obtenue doit être proche de zéro si les 2 courbes sont très semblables.
- méthode des ondelettes avec décomposition et analyse des correspondances en temps-fréquence ;
- utilisation de réseaux de neurones (standards ou à convolution), où un système multi-couches de neurones apprend en ajustant des poids internes à reconnaître une personne à partir du signal obtenu. Une telle approche est connue et accessible via les logiciels usuels de traitement du signal, par exemple MATLAB.

A l'issue de cette étape de comparaison, si le signal reçu correspond à la signature, l'utilisateur est authentifié et l'étape E8 peut être suivie d'une étape E9 de mise en oeuvre du déverrouillage et/ou de la transaction, par exemple la validation d'un paiement. Dans le cas contraire, c'est-à-dire si la réponse impulsionnelle R/R' ne correspond pas à la signature, on peut par exemple revenir à l'étape E1 et réémettre un signal impulsionnel. Selon une variante, un nombre de réémission prédéfini (par exemple 2) peut être autorisé avant l'annulation de la transaction.

L'étape E9 peut aussi comprendre une sous-étape de mise à jour de la signature : le signal R' obtenu après traitement peut être utilisé pour modifier la signature de l'utilisateur, qui peut notamment avoir changé pour des raisons biométriques (il a vieilli, grossi, etc.) ou mécaniques (son approche du mobile est différente).

La **figure 5** montre un exemple de réponse impulsionnelle reçue pour un utilisateur donné. La courbe supérieure de la figure 5 représente un signal temporel correspondant à une impulsion. Un tel signal est naturellement donné pour exemple, l'impulsion pouvant être notamment de durée plus courte, sans perte de généralité. La courbe inférieure, représente la réponse temporelle à cette impulsion lorsque le corps d'un utilisateur humain donné a réémis le signal impulsionnel. Les deux ondes ne sont clairement pas superposables. Les différences entre les deux courbes (fréquence, amplitude, enveloppe, etc.) sont caractéristiques de la transmission du signal dans le corps humain.

Il va de soi que le mode de réalisation qui a été décrit ci-dessus a été donné à titre purement indicatif et nullement limitatif, et que de nombreuses modifications peuvent être facilement apportées par l'homme de l'art sans pour autant sortir du cadre de l'invention.

## Revendications

1. Procédé de reconnaissance d'un utilisateur dont le corps est apte à réémettre, sous forme d'une onde électromagnétique (R), un signal électromagnétique reçu (A), le procédé étant mis en oeuvre par un dispositif d'émission-réception (M), et comprenant les étapes suivantes mises en oeuvre par le dispositif :
- émission (E1) d'un signal électromagnétique impulsionnel (A) ;
- obtention (E2) d'un signal électromagnétique réémis par son corps (R) lorsque l'utilisateur est à proximité du dispositif, ledit signal étant fonction du signal impulsionnel émis ;
- comparaison (E7) du signal électromagnétique réémis (R) avec au moins un signal de référence de l'utilisateur ;
- reconnaissance (E9) de l'utilisateur en fonction du résultat de ladite étape de comparaison (E7);
le procédé étant **caractérisé en ce que** ledit signal électromagnétique impulsionnel (A) est un signal électromagnétique en champ proche de type Near Field Communication.

2. Procédé de reconnaissance selon la revendication 1, dans lequel l'étape de reconnaissance est suivie d'une étape de mise à jour du signal de référence (SIG) de l'utilisateur par la prise en compte du signal réémis (R).

3. Procédé de reconnaissance selon l'une quelconque des revendications précédentes, dans lequel l'étape de reconnaissance est suivie d'une étape de déverrouillage du dispositif d'émission-réception.

4. Procédé de reconnaissance selon l'une quelconque des revendications précédentes, dans lequel l'étape de reconnaissance est suivie d'une étape d'autorisation d'une transaction.

5. Procédé de reconnaissance selon l'une quelconque des revendications précédentes, dans lequel ledit au moins un signal de référence est associé à un identifiant d'un utilisateur et en ce que l'étape de reconnaissance est suivie d'une étape de sélection de l'utilisateur reconnu par son identifiant.

6. Procédé de reconnaissance selon l'une quelconque des revendications précédentes, dans lequel l'étape de comparaison du signal réémis avec au moins un signal de référence de l'utilisateur comporte les sous-étapes suivantes :
- numérisation du signal (R) reçu ;
- normalisation du signal (R) numérisé ;
- mesure d'une distance entre les deux signaux.

7. Procédé d'apprentissage d'une signature (SIG) d'un utilisateur dont le corps est apte à réémettre, sous forme d'une onde électromagnétique (R), un signal électromagnétique reçu (A), en vue de sa reconnaissance, le procédé étant mis en oeuvre par un dispositif d'émission-réception (M), et comprenant les étapes suivantes par le dispositif :
- émission (E1) d'au moins un signal électromagnétique impulsionnel (A) ;
- obtention (E2) d'au moins un signal électromagnétique réémis (R) par son corps lorsque l'utilisateur est à proximité du dispositif, ledit signal étant fonction du signal impulsionnel émis ;
- génération (E6) d'un signal de référence, dit signature, en fonction dudit au moins un signal électromagnétique réémis (R) reçu ;
- enregistrement (E6) dudit signal de référence en tant que signature de l'utilisateur ;
le procédé étant **caractérisé en ce que** ledit signal électromagnétique impulsionnel (A) est un signal électromagnétique en champ proche de type Near Field Communication.

8. Procédé d'apprentissage d'une signature (SIG) d'un utilisateur selon la revendication 7, dans lequel le signal de référence est enregistré en association avec un identifiant de l'utilisateur.

9. Dispositif de reconnaissance d'un utilisateur dont le corps est apte à réémettre, sous forme d'une onde électromagnétique (R), un signal électromagnétique reçu (A), comportant :
- un module (CLF, ANT) pour émettre un signal électromagnétique impulsionnel (A) ;
- un module (ANT, CLF) pour obtention d'un signal électromagnétique réémis (R) par son corps lorsque l'utilisateur est à proximité du dispositif, ledit signal étant fonction du signal impulsionnel émis ;
- un module (PG, UT) pour comparaison du signal électromagnétique réémis (R) avec au moins un signal de référence de l'utilisateur ;
- un module (PG, UT) pour reconnaissance de l'utilisateur en fonction du résultat dudit module pour comparaison;
le dispositif étant **caractérisé en ce que** ledit signal électromagnétique impulsionnel (A) est un signal électromagnétique en champ proche de type Near Field Communication.

10. Terminal mobile ou dispositif de contrôle d'accès comprenant un dispositif selon la revendication 9

11. Dispositif d'apprentissage d'une signature (SIG) d'un utilisateur dont le corps est apte à réémettre, sous forme d'une onde électromagnétique (R), un signal électromagnétique reçu (A), comportant :
- un module (CLF, ANT) pour émettre un signal électromagnétique impulsionnel (A) ;
- un module (ANT, CLF) pour obtention d'un signal électromagnétique réémis (R) par son corps lorsque l'utilisateur est à proximité du dispositif, ledit signal étant fonction du signal impulsionnel ;
- un module (PG, UT) pour générer (E6) un signal de référence, dit signature, en fonction dudit au moins un signal électromagnétique réémis (R) reçu ;
- un module (PG, UT) pour enregistrer (E6) ledit signal de référence en tant que signature de l'utilisateur ;
le dispositif étant **caractérisé en ce que** ledit signal électromagnétique impulsionnel (A) est un signal électromagnétique en champ proche de type Near Field Communication.

12. Terminal mobile ou dispositif de contrôle d'accès comprenant un dispositif selon la revendication 11.

13. Programme d'ordinateur comportant des instructions pour la mise en oeuvre du procédé de reconnaissance d'un utilisateur ou du procédé d'apprentissage d'une signature d'un utilisateur selon l'une quelconque des revendications 1 à 8, lorsque le programme est exécuté par un processeur du dispositif de reconnaissance d'un utilisateur selon la revendication 9, respectivement du dispositif d'apprentissage d'une signature d'un utilisateur selon la revendication 11.

## Patentansprüche

1. Verfahren zur Erkennung eines Benutzers, dessen Körper fähig ist, ein empfangenes elektromagnetisches Signal (A) in Form einer elektromagnetischen Welle (R) wiederauszusenden, wobei das Verfahren von einer Sende-Empfangs-Vorrichtung (M) durchgeführt wird und die folgenden von der Vorrichtung durchgeführten Schritte enthält:
- Senden (E1) eines elektromagnetischen Impulssignals (A) ;
- Erhalt (E2) eines elektromagnetischen Signals (R), das von seinem Körper wiederausgesendet wird, wenn der Benutzer in der Nähe der Vorrichtung ist, wobei das Signal vom gesendeten Impulssignal abhängt;
- Vergleich (E7) des wiederausgesendeten elektromagnetischen Signals (R) mit mindestens einem Bezugssignal des Benutzers;
- Erkennung (E9) des Benutzers abhängig vom Ergebnis des Vergleichsschritts (E7);
wobei das Verfahren **dadurch gekennzeichnet ist, dass** das elektromagnetische Impulssignal (A) ein elektromagnetisches Nahfeld-Signal vom Typ Near Field Communication ist.

2. Erkennungsverfahren nach Anspruch 1, wobei auf den Erkennungsschritt ein Schritt der Aktualisierung des Bezugssignals (SIG) des Benutzers durch die Berücksichtigung des wiederausgesendeten Signals (R) folgt.

3. Erkennungsverfahren nach einem der vorhergehenden Ansprüche, wobei auf den Erkennungsschritt ein Schritt der Entriegelung der Sende-Empfangs-Vorrichtung folgt.

4. Erkennungsverfahren nach einem der vorhergehenden Ansprüche, wobei auf den Erkennungsschritt ein Schritt der Genehmigung einer Transaktion folgt.

5. Erkennungsverfahren nach einem der vorhergehenden Ansprüche, wobei das mindestens eine Bezugssignal einer Kennung eines Benutzers zugeordnet ist, und auf den Erkennungsschritt ein Schritt der Auswahl des durch seine Kennung erkannten Benutzers folgt.

6. Erkennungsverfahren nach einem der vorhergehenden Ansprüche, wobei der Schritt des Vergleichs des wiederausgesendeten Signals mit mindestens einem Bezugssignal des Benutzers die folgenden Teilschritte aufweist:
- Digitalisierung des empfangenen Signals (R);
- Normierung des digitalisierten Signals (R);
- Messung eines Abstands zwischen den zwei Signalen.

7. Lernverfahren einer Signatur (SIG) eines Benutzers, dessen Körper ein empfangenes elektromagnetisches Signal (A) in Form einer elektromagnetischen Welle (R) für seine Erkennung wiederaussenden kann, wobei das Verfahren von einer Sende-Empfangs-Vorrichtung (M) durchgeführt wird und die folgenden Schritte durch die Vorrichtung enthält:
- Senden (E1) mindestens eines elektromagnetischen Impulssignals (A);
- Erhalt (E2) mindestens eines von seinem Körper wiederausgesendeten elektromagnetischen Signals (R), wenn der Benutzer in der Nähe der Vorrichtung ist, wobei das Signal vom gesendeten Impulssignal abhängt;
- Erzeugung (E6) eines Bezugssignals, Signatur genannt, abhängig von dem mindestens einen empfangenen wiederausgesendeten elektromagnetischen Signal (R);
- Speichern (E6) des Bezugssignals als Signatur des Benutzers;
wobei das Verfahren **dadurch gekennzeichnet ist, dass** das elektromagnetische Impulssignal (A) ein elektromagnetisches Nahfeld-Signal vom Typ Near Field Communication isr.

8. Lernverfahren einer Signatur (SIG) eines Benutzers nach Anspruch 7, wobei das Bezugssignal zusammen mit einer Kennung des Benutzers gespeichert wird.

9. Vorrichtung zur Erkennung eines Benutzers, dessen Körper fähig ist, ein empfangenes elektromagnetisches Signal (A) in Form einer elektromagnetischen Welle (R) wiederauszusenden, die aufweist:
- ein Modul (CLF, ANT) zum Senden eines elektromagnetischen Impulssignals (A);
- ein Modul (ANT, CLF) zum Erhalt eines von seinem Körper wiederausgesendeten elektromagnetischen Signals (R), wenn der Benutzer in der Nähe der Vorrichtung ist, wobei das Signal vom gesendeten Impulssignal abhängt;
- ein Modul (PG, UT) zum Vergleich des wiederausgesendeten elektromagnetischen Signals (R) mit mindestens einem Bezugssignal des Benutzers;
- ein Modul (PG, UT) zur Erkennung des Benutzers abhängig vom Ergebnis des Vergleichsmoduls;
wobei die Vorrichtung **dadurch gekennzeichnet ist, dass** das elektromagnetische Impulssignal (A) ein elektromagnetisches Nahfeld-Signal vom Typ Near Field Communication ist.

10. Mobiles Endgerät oder Zugangskontrollvorrichtung, das eine Vorrichtung nach Anspruch 9 enthält.

11. Lernvorrichtung einer Signatur (SIG) eines Benutzers, dessen Körper fähig ist, ein empfangenes elektromagnetisches Signal (A) in Form einer elektromagnetischen Welle (R) wiederauszusenden, die aufweist:
- ein Modul (CLF, ANT) zum Senden eines elektromagnetischen Impulssignals (A);
- ein Modul (ANT, CLF) zum Erhalt eines von seinem Körper wiederausgesendeten elektromagnetischen Signals (R), wenn der Benutzer in der Nähe der Vorrichtung ist, wobei das Signal vom gesendeten Impulssignal abhängt;
- ein Modul (PG, UT) zur Erzeugung (E6) eines Bezugssignals, Signatur genannt, abhängig vom mindestens einen empfangenen wiederausgesendeten elektromagnetischen Signal (R);
- ein Modul (PG, UT) zum Speichern (E6) des Bezugssignals als Signatur des Benutzers;
wobei die Vorrichtung **dadurch gekennzeichnet ist, dass** das elektromagnetische Impulssignal (A) ein elektromagnetisches Nahfeld-Signal vom Typ Near Field Communication ist.

12. Mobiles Endgerät oder Zugangskontrollvorrichtung, das eine Vorrichtung nach Anspruch 11 enthält.

13. Computerprogramm, das Anweisungen zur Durchführung des Erkennungsverfahrens eines Benutzers oder des Lernverfahrens einer Signatur eines Benutzers nach einem der Ansprüche 1 bis 8 aufweist, wenn das Programm von einem Prozessor der Vorrichtung zur Erkennung eines Benutzers nach Anspruch 9 bzw. der Lernvorrichtung einer Signatur eines Benutzers nach Anspruch 11 ausgeführt wird.

## Claims

1. Method for recognising a user whose body is able to retransmit, in the form of an electromagnetic wave (R), a received electromagnetic signal (A), the method being implemented by a transceiver device (M), and comprising the following steps implemented by the device:
- transmission (E1) of a pulsed electromagnetic signal (A) ;
- obtaining (E2) of an electromagnetic signal retransmitted by his or her body (R) when the user is in proximity to the device, said signal being a function of the pulsed signal transmitted;
- comparison (E7) of the retransmitted electromagnetic signal (R) with at least one reference signal of the user;
- recognition (E9) of the user as a function of the result of said comparison step (E7);
the method being **characterised in that** said pulsed electromagnetic signal (A) is a near-field electromagnetic signal of the Near Field Communication type.

2. Recognition method according to Claim 1, wherein the recognition step is followed by a step of updating of the reference signal (SIG) of the user by the inclusion of the retransmitted signal (R).

3. Recognition method according to either one of the preceding claims, wherein the recognition step is followed by a step of unlocking of the transceiver device.

4. Recognition method according to any one of the preceding claims, wherein the recognition step is followed by a step of authorisation of a transaction.

5. Recognition method according to any one of the preceding claims, wherein said at least one reference signal is associated with an identifier of a user and in that the recognition step is followed by a step of selection of the user recognised by his or her identifier.

6. Recognition method according to any one of the preceding claims, wherein the step of comparison of the retransmitted signal with at least one reference signal of the user comprises the following substeps:
- digitisation of the received signal (R);
- normalisation of the digitised signal (R);
- measurement of a distance between the two signals.

7. Method for learning a signature (SIG) of a user whose body is able to retransmit, in the form of an electromagnetic wave (R), a received electromagnetic signal (A), for the recognition thereof, the method being implemented by a transceiver device (M), and comprising the following steps by the device:
- transmission (E1) of at least one pulsed electromagnetic signal (A);
- obtaining (E2) of at least one electromagnetic signal (R) retransmitted by his or her body when the user is in proximity to the device, said signal being a function of the pulsed signal transmitted;
- generation (E6) of a reference signal, called signature, as a function of said at least one retransmitted electromagnetic signal (R) received;
- saving (E6) of said reference signal as signature of the user;
the method being **characterised in that** said pulsed electromagnetic signal (A) is a near-field electromagnetic signal of Near Field Communication type.

8. Method for learning a signature (SIG) of a user according to Claim 7, wherein the reference signal is saved in association with an identifier of the user.

9. Device for recognising a user whose body is capable of retransmitting, in the form of an electromagnetic wave (R), a received electromagnetic signal (A), comprising:
- a module (CLF, ANT) for transmitting a pulsed electromagnetic signal (A);
- a module (ANT, CLF) for obtaining an electromagnetic signal (R) retransmitted by his or her body when the user is in proximity to the device, said signal being a function of the pulsed signal transmitted;
- a module (PG, UT) for comparing the retransmitted electromagnetic signal (R) with at least one reference signal of the user;
- a module (PG, UT) for recognising the user as a function of the result of said module for comparison;
the device being **characterised in that** said pulsed electromagnetic signal (A) is a near-field electromagnetic signal of Near Field Communication type.

10. Mobile terminal or access control device comprising a device according to Claim 9.

11. Device for learning a signature (SIG) of a user whose body is capable of retransmitting, in the form of an electromagnetic wave (R), a received electromagnetic signal (A), comprising:
- a module (CLF, ANT) for transmitting a pulsed electromagnetic signal (A);
- a module (ANT, CLF) for obtaining an electromagnetic signal (R) retransmitted by his or her body when the user is in proximity to the device, said signal being a function of the pulsed signal;
- a module (PG, UT) for generating (E6) a reference signal, called signature, as a function of said at least one retransmitted electromagnetic signal (R) received;
- a module (PG, UT) for saving (E6) said reference signal as signature of the user;
the device being **characterised in that** said pulsed electromagnetic signal (A) is a near-field electromagnetic signal of Near Field Communication type.

12. Mobile terminal or access control device comprising a device according to Claim 11.

13. Computer program comprising instructions for the implementation of the method for recognising a user or the method for learning a signature of a user according to any one of Claims 1 to 8, when the program is run by a processor of the device for recognising a user according to Claim 9, or of the device for learning a signature of a user according to Claim 11, respectively.
